# EUROPEAN PATENT APPLICATION

(11) **EP 1 732 156 A1**
(43) Date of publication of application: **13.12.2006**
(21) Application number: 06114098.4
(22) Date of filing: 17.05.2006
(51) Int. Cl.: H01M 8/04

(54) **Distributed control method for fuel cell system and the fuel cell system operated thereby**

(30) Priority: 19.05.2005 CN 200510070980
(71) Applicant: Antig Technology Co., Ltd., 114 Taipei (TW)
(72) Inventor: Shu, His-Ming, Taipei County (TW); Deng, Feng-Yi, Taipei (TW); Tang, Yu-Lin, Taipei County (TW); Chung, Ya-Chien, Taipei County (TW)
(74) Representative: Viering, Jentschura & Partner

(57) **Abstract**

A distributed control method for a fuel cell system is disclosed. An auxiliary power source first provides power for a main control unit and a power management unit during the fuel cell system is turned on. The main control unit repeatedly receives status data of fuel cells from the power management unit or actively inquires of the power management unit to determine whether the fuel cell system is abnormal, and real-time regulates the system to maintain it in an optimal condition. The power management unit detects the status of the fuel cell using sensors, produces a corresponding status datum, and then feeds back the status datum to the main control unit. While the fuel cell system is turned off, fuels residual in flow channels of a fuel cell and un-drained products produced by the electrochemical reaction of a fuel cell are cleaned up, and the last status of the fuel cell before shut off is stored. According to the method, the main control unit and the power management unit keep being actuated no matter whether the fuel cell system is turned on or off. Therefore, the status of fuel cells is monitored continuously, securing the performance thereof.

## Description

### FIELD OF THE INVENTION

The present invention relates to a method of managing fuel cells, and more particularly, to a distributed control method applied to fuel cell systems.

### BACKGROUND OF THE INVENTION

Prior arts about fuel cell systems almost all describe the deployment of hardware in fuel cells; for example, they discuss how to construct stacked fuel cell systems or planar fuel cell systems. These prior arts contribute to the facility in configuring hardware of fuel cell systems, but fail to disclose how to manage fuel cell systems efficiently so that the fuel cell systems continue functioning at an optimal status through control.

Managing electricity well can make electrical devices like notebooks or cellular phones have longer time of use and more stable power supply. Similarly, fuel cells face the challenge of controlling electricity when applied to electrical devices. That is the reason why good control is important to advance fuel cells in the future.

In view of the aforesaid disadvantages and the importance of electricity management, a distributed control method for controlling fuel cell systems and a fuel cell system thereby are needed.

### SUMMARY OF THE INVENTION

It is a primary object of the invention to provide a distributed control method for a fuel cell system and the fuel cell system operated thereby. The fuel cell system can continuously and steadily output power.

In accordance with the aforesaid object of the invention, a distributed control method for a fuel cell system is provided. An auxiliary power source first supplies power for a main control unit and a power management unit while the fuel cell system is turned on. The main control unit repeatedly receives status data of fuel cells from the power management unit or actively inquires of the power management unit to determine whether the fuel cell system is abnormal, and real-time regulates the system to maintain it in an optimal condition. The power management unit detects the status of the fuel cell using sensors, to produce the corresponding status data, and then respond the status datum to the main control unit. While the fuel cell system is turned off, fuels residual in flow channels of a fuel cell and un-drained products produced by the electrochemical reaction of a fuel cell are cleaned up, and the last status of the fuel cell before shut off is stored. According to the method, the main control unit and the power management unit keep being actuated no matter whether the fuel cell system is turned on or off. Therefore, the status of fuel cells is monitored continuously, securing the performance thereof.

### BRIEF DESCRIPTION OF THE DRAWINGS

The foregoing aspects, as well as many of the attendant advantages and features of this invention will become more apparent by reference to the following detailed description, when taken in conjunction with the accompanying drawings, wherein:
Fig. 1 is a flow chart of the distributed control over a fuel cell system according to an embodiment of the invention;
Fig. 2 illustrates a fuel cell system for employing the distributed control method in accordance with an embodiment of the invention;
Fig. 3 is a flow chart of a distributed control method according to another embodiment of the invention, which further comprises self-activating a fuel cell system; and
Fig. 4 illustrates a fuel cell system according to an embodiment of the invention.

### DETAILED DESCRIPTION OF THE INVENTION

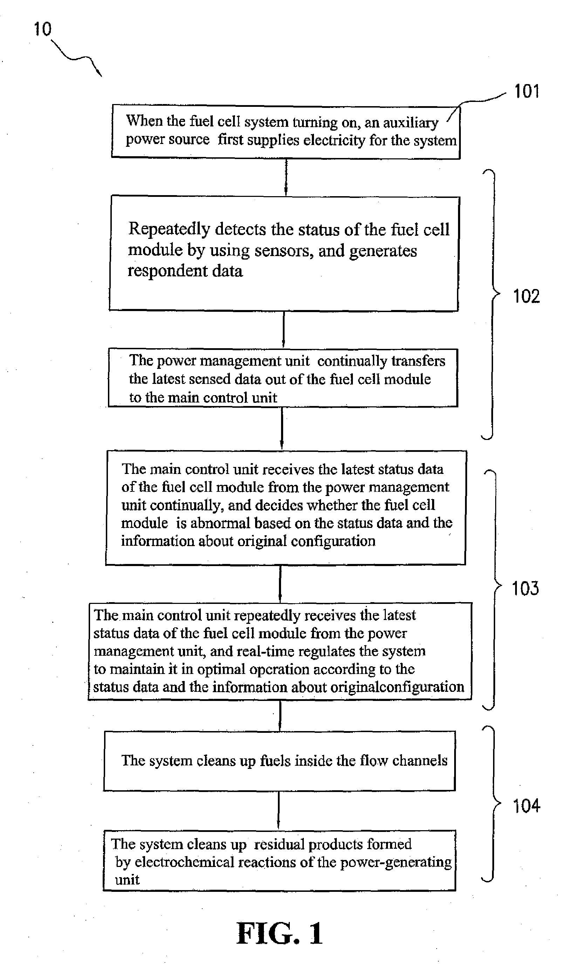

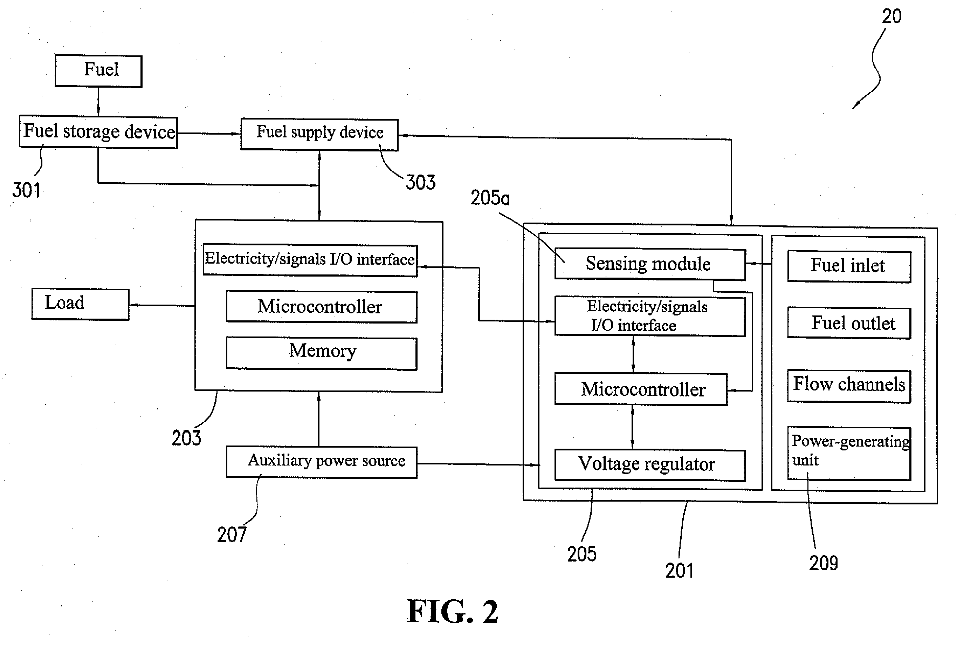

Fig. 1 is a flow chart of distributed control over a fuel cell system according to an embodiment of the invention. Fig. 2 is a diagram showing a fuel cell system that employs the distributed control method in accordance with an embodiment of the invention. The distributed control method 10 is provided to intelligently and effectively manage the fuel cell system 20 such that the fuel cell system 20 is continuously operated in an optimal condition, and to real-time monitor the operated fuel cell system 20 and responsively trigger an alarm if some abnormality occurs. The distributed control method 10 comprises steps 101-104, which are separately described hereinafter. The step 101 is performed to turn on the fuel cell system 20. While the fuel cell system 20 is turned on in the step 101, an auxiliary power source 207 first supplies electricity for the whole fuel cell system 20 to actuate a main control unit 203 and a power management unit 205. After being actuated, the main control unit 203 reads out the information about original profile/configuration of the fuel cell system 20 (e.g. design power, design voltage, operational concentration, operational temperature, and so on) and the information about previous status of the system (e.g. residual content of fuels) before the system is turned off from a memory, and then inspects the present conditions of the fuel cell system 20, such as the current content of fuels remaining within a fuel storage device 301. If the content of fuels is less than a predetermined lower limit, users will be reminded by a warning light or sound to supplement fuels. The actuated main control unit 203 and the power management unit 205 transfer data to each other for real-time monitoring of the latest condition of the operated fuel cell system 20.

After the power management unit 205 is actuated, a sensing module 205a composed of various sensors detects the current conditions of a fuel cell module 201. For example, the present temperature of the fuel cell module 201, the remaining content of fuels in flow channels and the concentration thereof are detected by a temperature sensor, a level sensor and a concentration sensor, respectively. Next, the power management unit 205 transmits the sensed data to the main control unit 203.

The step 102 is executed by the power management unit 205. In the step 102, the power management unit 205 repeatedly detects the status of the fuel cell module 201 using manifold sensors, and generates respondent data, such as the information about residual content of fuels, concentration of fuels, temperature in the operated fuel cells, and so forth. Besides, in the step 102, the power management unit 205 continually transfers the latest sensed data out of the fuel cell module 201 to the main control unit 203 for managing the operation of the system 20.

The step 103 is executed by the main control unit 203. In the step 103, the main control unit 203 receives the latest status data of the fuel cell module 201 from the power management unit 205 continually, and decides whether the fuel cell module 201 is abnormal based on the status data and the information about original configuration. If some abnormality occurs, warning signals will be sent out or the fuel cell system 20 will be suspended. In one aspect, the main control unit 203 in the step 103 repeatedly receives the latest status data of the fuel cell module 201 from the power management unit 205, and real-time regulates the fuel cell system 20 to maintain it in optimal operation according to the status data and the information about original configuration. In another aspect, the main control unit 203 inquires of the power management unit 205 about the latest status of the fuel cell system 20 at the same time. The main control unit 203 in the step 103 instantaneously compares the data responded by the power management unit 205 with determined settings. Warning messages may be sent out based on predetermined settings, for example, alarms flashing when the sensed temperature is out of the operational range. Or, error messages may be returned back to electrical devices, and the fuel cell system 20 is paused or stops generating electricity during a determined period of time. If the system 20 includes a temperature control system (not shown), the temperature control system will be actuated to control the operational temperature within an adequate range. Furthermore, the main control unit 203 real-time monitors the content of fuels and the concentration remaining in the fuel cell module 201. The main control unit 203 calculates these data and other data like the content of fuels and the concentration in the fuel storage device 301, and computes the optimal amount and concentration of fuels refilled into the fuel cell module 201. A fuel supply device 303, such as a pump, is driven to deliver the required fuels to the fuel cell module 201.

The step 103 performed by the main control unit 203 further comprises storing the status data of the present operated fuel cell system 20 regularly, such as percentage of the residual fuels, concentration, percentage of remaining power, and etc., through which the main control unit 203 traces and manages the operation of the system 20.

The step 104 is performed to turn off the fuel cell system 20. While the fuel cell system 20 is turned off in the step 104, the system 20 cleans up fuels inside the flow channels and residual products formed by electrochemical reactions of a power-generating unit 209. In order to prevent the power-generating unit 209 that keeps performing electrochemical reactions from being affected when users shut off the fuel cell system 20, it is noted that the procedure for turning off the system 20 should finish before the power-generating unit 209 stops working completely, such that the fuel cell module 201 does not lose its control over residual heat and water. In the procedure for turning off, some fuels may remain in flow channels of the fuel cell module 201 despite the termination of fuel supply, and the fuel cell module 201 continues operating until the remaining fuels are exhausted. The systems for controlling heat and water keep performing as well prior to the exhaustion of fuels, and hence the system 20 is less influenced by abrupt drop in temperatures or insufficient flow rates induced by shutting off the system 20, avoiding a waterlogged cathode of the power-generating unit 209.

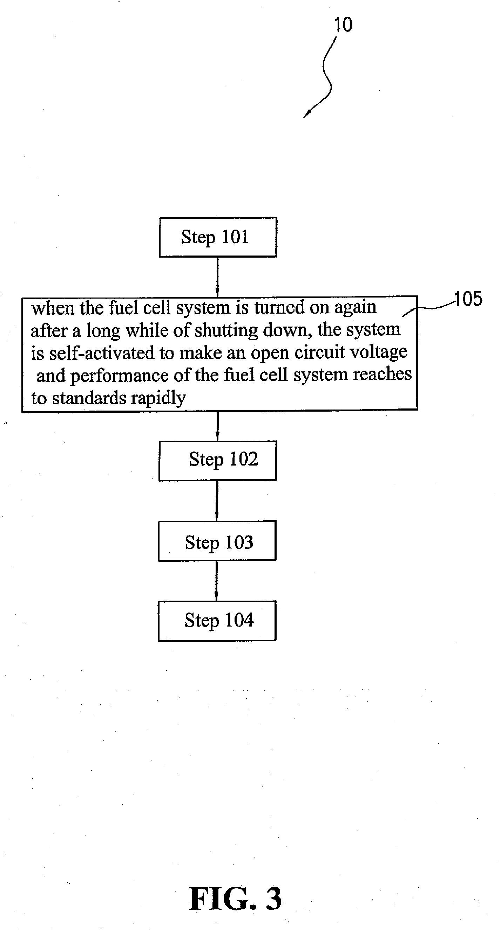

Fig. 3 is a flow chart of a distributed control method according to another embodiment of the invention, which further comprises self-activating a fuel cell system. As shown in Fig. 3, the distributed control method 10 also comprises a step 105 of self-activating the fuel cell system 20. When the fuel cell system 20 is turned on again after a long period of shutting down, the open circuit voltage and the performance of the system 20 reach to standards rapidly if the system 20 is self-activated. The way to self-activate may utilize a built-in load, which switches between a load state and an unload state. After the power-generating unit 209 is self-activated, the main control unit 203 commands the fuel cell module 201 to output power regarding to the requirement of electrical devices. After the procedure for self-activating is performed, the fuel cell module 201 substitutes for the auxiliary power source 207 to provide electricity. The auxiliary power source 207 may be a secondary battery that can be charged by the fuel cell module 201. As the fuel cell module 201 generates power and fuels therein are consumed constantly after performing the procedure for self-activating, the main control unit 203 and the power management unit 205 serve to ensure that continuous and steady power is output by the system 20.

The auxiliary power source 207 may be a primary battery, for example, dry batteries, carbon-zinc batteries or alkaline batteries. Alternatively, the auxiliary power source 207 may be a secondary battery, for example, lead acid batteries, nickel cadmium batteries, nickel hydrogen batteries, lithium ion batteries, or polymer lithium batteries. Alternatively, the auxiliary power source 207 may be other kinds of power suppliers, such as solar cells, super capacitors, or AC/DC converters.

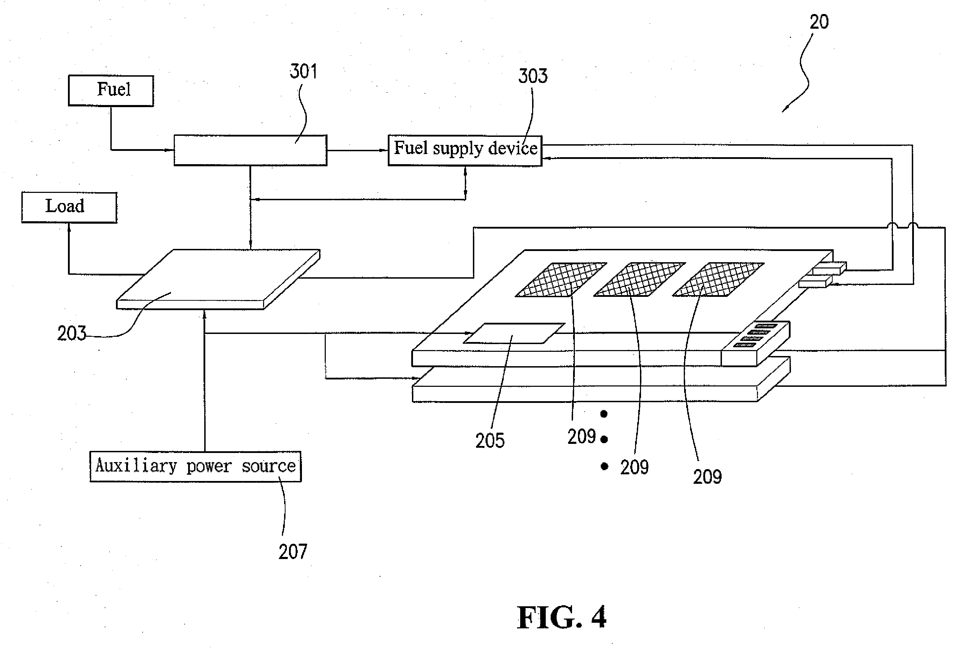

Fig. 4 illustrates a fuel cell system according to an embodiment of the invention. The fuel cell module 201 may be a piece of bipolar fuel cell plate or a fuel cell device composed of two or more bipolar fuel cell plates. The bipolar fuel cell plate 201 also includes at least a membrane electrode assembly (MEA) disposed thereon, which is an exemplar of the power-generating unit 209. The bipolar fuel cell plate 201 further comprises an inlet, an outlet and flow channels for flowing fuels. The power management unit 205 may be a single piece of circuit board. Or, the power management unit 205 may be directly built in the bipolar fuel cell plate 201, i.e. circuit components for the power management unit 205 like sensors, microcontrollers and voltage-regulators are soldered or disposed on the bipolar fuel cell plate 201 directly. A golden finger is disposed on the partial side of the bipolar fuel cell plate 201 for input/output (I/O) electricity/signals. The bipolar fuel cell plate 201 is electrically coupled to the main control unit 203 through a golden finger or a connector. The main control unit 203 may be a piece of printed circuit substrate, on which circuit components for the main control unit 203 are disposed, such as microcontroller, memories and electricity/signals I/O interfaces. The fuel storage device 301 may be a trench-type container or a cassette-type container. The fuel supply device 303 may include a pump for delivering fuels.

According to the aforementioned distributed control method 10, the main control unit 203 and the power management unit 205 keep being actuated, no matter whether the fuel cell system is turned on or off. Therefore, the status of fuel cells is monitored continuously, securing the performance thereof.

These and other changes can be made to the present systems and methods in light of the above-detailed description. In general, in the following claims, the terms used should not be construed to limit the invention to the specific embodiments disclosed in the specification and the claims, but should be construed to include all power systems and methods that read in accordance with the claims. Accordingly, the invention is not limited by the disclosure, but instead its scope is to be determined entirely by the following claims.

## Claims

1. A distributed control method for a fuel cell system, wherein the fuel cell system comprises a main control unit, a power management unit, an auxiliary power source, and at least a fuel cell for generating electricity, the method comprising:
turning on the fuel cell system, wherein when the fuel cell system is turned on, the auxiliary power source first provides power for the main control unit and the power management unit;
executing following steps by the main control unit:
repeatedly receiving status data of the fuel cell from the power management unit to determine whether the fuel cell system is abnormal based on the status data and information about original configuration, and triggering an alarm and/or stopping an operation of the fuel cell system if an abnormality occurs; and
repeatedly receiving status data of the fuel cell from the power management unit, and real-time regulating the fuel cell system to maintain the fuel cell system in an optimal condition based on the status data and information about original configuration;
executing following steps by the power management unit:
detecting a status of the fuel cell by using at least a sensor, and producing a corresponding status datum, wherein the status datum comprises information about remaining content of fuels, fuel concentration and operational temperatures of the fuel cell; and
transmitting the status datum from the power management unit to the main control unit;
turning off the fuel cell system, comprising:
cleaning up fuels residual in flow channels of a fuel cell; and
cleaning up un-drained products produced during an electrochemical reaction of a fuel cell.

2. The method of claim 1, further comprising:
self-activating the fuel cell system, when the fuel cell system is turned on again after a long while of shutting down, the fuel cell system is self-activated to make an open circuit voltage and performance of the fuel cell system reaches to standards rapidly.

3. The method of claim 1, wherein the main control unit further executes following steps of
reading out information about original configuration of the fuel cell system; and
reading out previous status data stored when the fuel cell system is shut off earlier.

4. The method of claim 1, wherein turning off the fuel cell system further comprises storing shut-off status data in the main control unit when the fuel cell system is turned off.

5. The method of claim 1, wherein the main control unit further executes a step of:
regularly storing current status data of an operated fuel cell system.

6. The method of claim 5, wherein the status data comprises a percentage of fuels, a concentration of fuels and a remaining percentage of electricity.

7. The method of claim 1, wherein the main control unit further executes a step of:
actively inquiring of the power management unit about a latest status of the fuel cell system.

8. A fuel cell system, the system comprising:
at least a fuel cell for generating electricity;
a power management unit including at least a sensor for detecting a status of the fuel cell and producing a corresponding status datum, wherein the status datum comprises information about remaining content of fuels, fuel concentration and operational temperature of the fuel cell;
a main control unit connected to the power management unit for repeatedly receiving status data of the fuel cell from the power management unit to determine whether the fuel cell system is abnormal based on the status data and information about original configuration and to alarm and/or stop an operation of the fuel cell system if an abnormality occurs, and for repeatedly receiving status data of the fuel cell from the power management unit, and for real-time regulating the fuel cell system to maintain the fuel cell system in an optimal condition based on the status data and information about original configuration; and
an auxiliary power source connected with the main control unit and the power management unit for first providing power for the main control unit and the power management unit during the fuel cell system is turned on;
wherein while the fuel cell system is turned off, the fuel cell system clears up fuels residual in flow channels of a fuel cell and cleans up un-drained products produced by an electrochemical reaction of a fuel cell.

9. The system of claim 8, wherein the fuel cell system is self-activated when the fuel cell system is turned on again after a long period of shutting down, to make an open circuit voltage and performance of the fuel cell system reach to standards rapidly.

10. The system of claim 8, wherein the main control unit comprises reading out information about original configuration of the fuel cell system, and reading out previous status data stored when the fuel cell system is shut off earlier.

11. The system of claim 8, wherein the main control unit comprises storing shut-off status data when the fuel cell system is turned off.

12. The system of claim 8, wherein the auxiliary power source is a primary battery, a secondary battery, a solar cell, a super capacitor, or an AC/DC converter.

13. The system of claim 8, further comprising a fuel storage device for containing fuels.

14. The system of claim 8, further comprising a fuel supply device for delivering fuels to the fuel cell.

15. The system of claim 8, wherein the main control unit comprises regularly storing current status data of an operated fuel cell system.

16. The system of claim 15, wherein the status data comprises a percentage of fuels, a concentration of fuels and a remaining percentage of electricity.

17. The system of claim 8, wherein the main control unit comprises actively inquiring of the power management unit about a latest status of the fuel cell system.
